# EUROPEAN PATENT APPLICATION

(11) **EP 4 716 075 A1**
(43) Date of publication of application: **25.03.2026**
(21) Application number: 24201309.2
(22) Date of filing: 19.09.2024
(51) Int. Cl.: H02M 1/00, H02M 3/335, H02M 5/45, H02M 7/12

(54) **SOLID-STATE TRANSFORMER AND SYSTEM**

(71) Applicant: Hitachi Energy Ltd, 8050 Zürich (CH)
(72) Inventor: Gradinger, Thomas Bernhard, 5032 Aarau Rohr (CH); Mogorovic, Marko, 1205 Geneva, (CH); Burkart, Ralph Mario, 8037 Zürich (CH)
(74) Representative: Epping - Hermann - Fischer

(57) **Abstract**

A solid-state transformer (1) is specified, comprising
- at least two modules (2) having a first side (3) and a second side (4), wherein each module (2) comprises
- at least one first converter (5) at the first side (3) and at least two second converters (6) at the second side (4), wherein
- the at least one first converter (5) is flux-linked to the at least two second converters (6) by a transformer (6), and wherein

- the at least two modules (2) are connected in series at the first side (3),
- the at least one first converter (5) is connected to a first winding (9) of the transformer (6), and
- each of the at least two second converters (6) is connected to a respective second winding (10) of the transformer (6).

Furthermore, a system is specified.

## Description

The present disclosure relates to a solid-state transformer and a system.

For typical applications, e.g. a fleet depot and/or a highway on-route charging application, a high-power multi-dispenser electric vehicle, EV, charging infrastructure, CI, system has to be provided that can serve many EVs at the same time.

Embodiments of the disclosure relate to a solid-state transformer which is particularly efficient.

This is achieved by the subject-matter of the independent claim. Further embodiments are evident from the dependent claims and the following description.

The solid-state transformer is described. Exemplarily, the solid-state transformer is configured to transform electrical energy from a first voltage level to at least one second voltage level. In particular, the solid-state transformer is a bidirectional transformer. This means that the solid-state transformer is additionally configured to transform electrical energy from the second voltage level to the first voltage level.

The solid-state transformer comprises, for example, power semiconductor devices. This means that the solid-state transformer is a power electronic transformer. At least some of the power semiconductor devices particularly are based on a semiconductor material. Each power semiconductor device can comprise insulated gate bipolar transistors, IGBTs, metal oxide semiconductor field-effect transistors, MOSFETs, and/or gallium nitride, GaN, transistors.

The term "power" here and in the following refers, for example, to power semiconductor devices particularly comprised by the solid-state transformer adapted for processing voltages and currents of more than 100 V and/or more than 10 A, exemplarily voltages of up to 10 kV and electrical currents of up to 10 kA.

According to an embodiment, the solid-state transformer comprises at least two modules having a first side and a second side. Exemplarily, each module has an input side which is characteristic of the first side, and each module has an output side which is characteristic of the second side. In particular, the first side and the second side are located opposite to one another.

As the modules can work bidirectionally, the input side can be the output side and the output side can be the input side. Thus, the terms "output" and "input" are used herein in particular for referencing different sides, e.g. the first side and the second side, of the modules.

Preferably, the first side is a medium voltage side and the second side is a low voltage side of the solid-state transformer. Exemplarily, elements of the solid-state transformer at the medium voltage side are configured to process electric energy of a medium voltage range and elements of the solid-state transformer at the low voltage side are configured to process electric energy of a low voltage range. Therefore, the indication of the first side and the second side can be characteristic for a geometrical relationship of the elements and/or a functional relationship of the elements.

According to the embodiment of the solid-state transformer, each module comprises at least one first converter at the first side and at least two second converters at the second side. Exemplarily, the first converter is of a first type and the second converter is of a second type, wherein the first type and the second type are different from one another. The type is, for example, characteristic of a voltage conversion from an alternating current, AC, to a direct current, DC, or vice versa. This means that, if the first type is indicative of a DC to AC conversion, the second type is indicative of an AC to DC conversion, and vice versa.

According to the embodiment of the solid-state transformer, the at least one first converter is flux-linked to the at least two second converters by a transformer. The transformer has, for example, a first side, to which the first converter is connected, and a second side, to which the second converters are connected.

In particular, the at least one first converter is connected to the first side of the transformer of the module and the at least two second converters are connected to the second side of the transformer of the module.

That the converters are flux-linked means, for example, that the first converter and each second converter are connected to one another by a magnetic link provided by the transformer. The magnetic link is configured to couple the first converter and the second converters magnetically. In particular, the transformer comprises a single magnetic core, to which the first converter and the second converters are connected. The single magnetic core particularly provides the magnetic link between the first and the second converters. Exemplarily, the single magnetic core comprises one single core or a plurality of cores, being connected in parallel to one another.

Advantageously, the single magnetic core serves as the magnetic link for a magnetic flux generated by each first and second converters. Using such single magnetic core advantageously leads to an efficient energy transfer between the first and the second converters. Thus, a redistribution of electrical energy from one of the second converters to another one of the second converters within one single module can be realized via the magnetic link.

According to the embodiment of the solid-state transformer, the at least two modules are connected in series at the first side. Exemplarily, each module has an input port and at least one, particularly at least two, output ports. The input port of the module is located at the first side and the output port of the module is located at the second side. The input ports of the modules are connected in particular in series.

Exemplarily, the first converter has an input port and an output port. The input port of the first converter is connected to the input port of the module and the output port of the first converter is connected to the transformer. In particular, the modules are connected in series via the input ports of the respective first converters and thus the input ports of the modules.

As the modules and converters can work bidirectionally, the respective input ports can be the output ports and the respective output ports can be the input ports. Particularly, the terms "output" and "input" are used herein for referencing different sides.

According to the embodiment of the solid-state transformer, the at least one first converter is connected to a first winding of the transformer, and each of the at least two second converters are connected to a respective second winding of the transformer. Exemplarily, the transformer comprises the first winding, the second windings and the single magnetic core. Exemplarily, the first winding is magnetically connected to the single magnetic core and the second windings are each magnetically connected to the single magnetic core. In particular, the first windings and each of the second windings are wound around the single magnetic core.

Exemplarily, each second converter has an input port and an output port. The input port of the second converter is connected to the transformer and the output port of the second converter is connected to the output port of the module.

Exemplarily, the output port of the first converter is connected to the first winding, and the input ports of the second converters are each connected to the respective second winding.

Each of the first winding and the second windings has a number of turns. The transformation of the electrical energy from the first voltage level to the second voltage level and vice versa is dependent on a ratio between the number of turns, particularly between the number of turns of the first winding and the number of turns of each of the second windings.

The solid-state transformer having several modules being connected in series as described herein advantageously avoids flux-linking of an unlimited number of first converters with second converters - particularly by modularizing the converters into a number of modules. This means that only the first converter and the second converters of one single module are flux-linked.

Exemplarily, the solid-state transformer comprises a plurality of the modules described herein above, wherein all the modules comprise the same components, e.g. the same first converter and second converters. A scaling to different voltage levels is advantageously achieved by adapting the number of modules that are series-connected.

According to a further embodiment of the solid-state transformer, the at least one first converter comprises a first direct current/alternating current, DC/AC, converter. Exemplarily, the first DC/AC converter is configured to convert an input DC voltage into an output AC voltage and vice versa. A DC side of the first DC/AC converter faces away from the transformer and an AC side of the first DC/AC converter is connected to the transformer, e.g. the first winding. The DC side of the first DC/AC converter comprises, for example, the input port of the first converter.

According to a further embodiment of the solid-state transformer, each of the at least two second converters comprises a second AC/DC converter. Exemplarily, the second AC/DC converter is configured to convert an input AC voltage into an output DC voltage and vice versa. An AC side of the second AC/DC converter is connected to the transformer, e.g. a respective second winding, and a DC side of the second AC/DC converter faces away from the transformer. The DC side of the second AC/DC converter comprises, for example, the output port of the second converter.

According to a further embodiment of the solid-state transformer, the at least one first converter comprises a first AC/DC converter and the first DC/AC converter. This means in particular that the first converter is an AC/DC/DC/AC converter comprising the first AC/DC converter and the first DC/AC converter.

Exemplarily, an AC side of the first AC/DC converter faces away from the first DC/AC converter. In particular, the AC side of the first AC/DC converter comprises the input port of the first converter. A DC side of the first AC/DC converter is connected to the DC side of the first DC/AC converter. Exemplarily, a capacitance is arranged between the DC side of the first AC/DC converter and the DC side of the first DC/AC converter.

According to a further embodiment of the solid-state transformer, the first DC/AC converter is connected to the transformer. For example, the AC side of the first DC/AC converter is connected to the transformer, particularly the first winding. In particular, the AC side of the first DC/AC converter comprises the output port of the first converter.

According to a further embodiment of the solid-state transformer, each of the at least two second converters comprises the second AC/DC converter and a second DC/AC converter. This means in particular that each second converter is an AC/DC/DC/AC converter comprising the second AC/DC converter and the second DC/AC converter.

In particular, an AC side of the second DC/AC converter comprises the output port of the second converter. The DC side of the second AC/DC converter is connected to a DC side of the second DC/AC converter.

According to a further embodiment of the solid-state transformer, the second AC/DC converter is connected to the transformer. For example, the AC side of the second AC/DC converter is connected to the transformer, particularly the respective second winding. In particular, the AC side of the second AC/DC converter comprises the input port of the second converter.

According to a further embodiment of the solid-state transformer, the transformer is a medium frequency transformer. Exemplarily, the medium frequency transformer operates in a range of at least 0.5 kHz or 1 kHz and/or at most 500 kHz or at most 100 kHz. For example, the single magnetic core of each medium frequency transformer comprises a ferrite, a nanocrystalline material and/or amorphous steel.

Advantageously, by using medium frequency transformers a comparatively high efficiency can be achieved. Additionally, higher power densities can be handled advantageously compared to typical transformers operating at a grid frequency of about 50 Hz or 60 Hz.

According to a further embodiment of the solid-state transformer, each module comprises at least two first converters at the first side. Exemplarily, each module comprises a plurality of the first converters at the first side.

Exemplarily, each module comprises the same number of first converters. Advantageously, such modules can be produced in a particularly cost saving manner.

Alternatively, at least some of the modules can comprise a different number of first converters.

According to a further embodiment of the solid-state transformer, the at least two first converters of a respective module are connected in series at the first side. Exemplarily, the input ports of directly neighbouring first converters are connected to one another for establishing the series connection.

In particular, each first converter is connected to a respective first winding of the transformer.

According to a further embodiment of the solid-state transformer, all the first converters of a respective module are flux-linked to the at least two second converters.

Advantageously, due to such a connection sufficient flexibility in power adaption is provided to the individual output ports of the modules, as a number of second converters per module being flux-linked can be predetermined to be comparatively small. Furthermore, a redistribution of electric energy can be advantageously achieved via the flux linkage, in particular for fine tuning.

According to a further embodiment of the solid-state transformer, at least two second converters of different modules are connected at the second side in series or in parallel. In particular, at least two second converters of the different modules are connected to one another via the output ports of the respective second converters. For example, one of the output ports of the respective second converters is connected to a respective output port of the respective module.

According to a further embodiment of the solid-state transformer, at least two second converters of the same module are connected at the second side in series or in parallel. In particular, at least two second converters of the same module are connected to one another via the output ports of the respective second converters. In particular, one of the output ports of the respective second converters is connected to a respective output port of the module.

Advantageously, the output of electrical energy can be predetermined particularly precisely and effectively by combining at least two outputs of different second converters of the same or different modules. Additionally, such a serial or parallel connection advantageously provides a comparatively good flexibility when allowing the redistribution of electric energy within the same module, i.e. via the flux link connection of the second converters.

According to a further embodiment of the solid-state transformer, at least some of the second converters of the same module are not connected to one another at the second side. In particular, each of the output ports of the respective second converters is connected to a respective output port of the module.

According to a further embodiment of the solid-state transformer, a matrix switch is connected to the second converters at the second side. Exemplarily, the output ports of the second converters are connected to the matrix switch.

Advantageously, a serial and/or parallel connection of the outputs of at least some of the second converters within a module and/or of different modules can be achieved with the matrix switch.

According to a further embodiment of the solid-state transformer, the solid-state transformer is a bidirectional solid-state transformer.

According to a further embodiment of the solid-state transformer, elements of the modules at the first side are configured to process electric energy of a medium voltage range, while elements of the modules at the second side are configured to process electric energy of a low voltage range.

The elements comprise, inter alia, the first converters and the respective ports. The medium voltage range is, for example, at least 1 kV and/or at most 50 kV. The low voltage range is, for example, smaller than 1 kV.

According to a further embodiment of the solid-state transformer, the modules at the first side are configured to be connectable to a power grid. The power grid is configured, for example, to provide electric energy of the medium voltage range to the solid-state transformer. Exemplarily, the power grid is connected to the input ports of the modules.

According to a further embodiment of the solid-state transformer, the modules at the second side are configured to be connectable to at least one energy dispenser. The energy dispenser is, for example, characteristic of a charging station of an electric vehicle. Exemplarily, the energy dispenser is connected to a respective output port of a respective module.

According to a further embodiment of the solid-state transformer, the modules at the second side are configured to be further connectable to at least one energy storage and/or at least one energy generator. Exemplarily, the energy storage and/or the energy generator is connected to a respective output port of a respective module.

Advantageously, by using also energy storages and/or one energy generator, electric energy can be provided also at the second side - for providing electric energy to the energy dispenser or the power grid.

A further embodiment relates to a system, in particular comprising a solid-state transformer as described herein above. Therefore, the features as described in connection with the system are also applicable for the solid-state transformer and vice versa.

According to an embodiment, the system comprises the solid-state transformer as described herein before.

According to the embodiment, the solid-state transformer is connected to a power grid at the first side, and the solid-state transformer is connected to at least one energy dispenser at the second side.

According to a further embodiment of the system, the power grid comprises three phases. In particular, the three phases are formed of a first phase, a second phase and a third phase.

According to a further embodiment of the system, the system comprises three solid-state transformers as described herein above, and each of the three solid state transformers is connected between one of the three phases and a reference potential. For example, the reference potential is a ground potential.

Exemplarily, the three solid-state transformers are formed of a first solid-state transformer, a second solid-state transformer and a third solid-state transformer. The first solid-state transformer is in particular connected between the first phase and the reference potential. The second solid-state transformer is in particular connected between the second phase and the reference potential. The third solid-state transformer is in particular connected between the third phase and the reference potential.

According to a further embodiment of the system, the system comprises three solid-state transformers as described herein above, and each of the three solid state transformers is connected between two of the three phases. The first solid-state transformer is in particular connected between the first phase and the second phase. The second solid-state transformer is in particular connected between the second phase and the third phase. The third solid-state transformer is in particular connected between the third phase and the first phase.

Advantageously, due to such arrangements of the solid-state transformers with respect to the phases, the solid-state transformer is connectable to a 3-phase AC grid.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.
Figure 1 shows a schematic view of a solid-state transformer according to an exemplary embodiment.
Figure 2 shows a schematic view of a module of a solid-state transformer according to an exemplary embodiment.

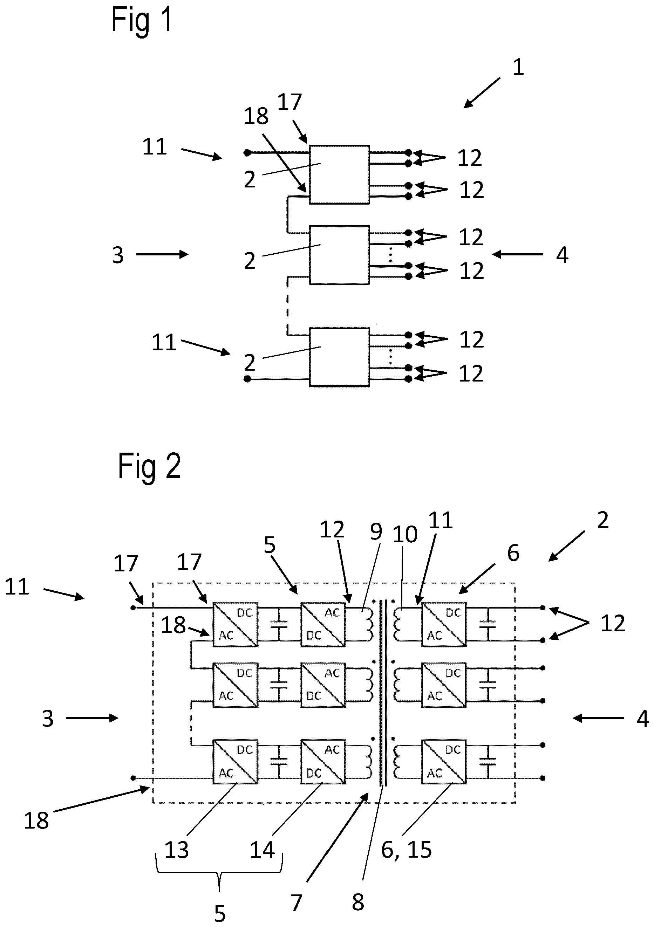

The solid-state transformer 1 according to the exemplary embodiment of Figure 1 comprises a plurality of modules 2, wherein each module 2 has a first side 3 and a second side 4, arranged opposite to one another. The modules 2 are equal to one another, and each module 2 comprises at least one first converter 5 at the first side 3 and at least two second converters 6 at the second side 4, as described in connection with Figure 2.

The solid-state transformer 1 is configured to be connected to a power grid at the first side 3, in particular an AC power grid.

The modules 2 are connected in series at the first side 3. Each module 2 has an input port 11, comprising a first sub-port 17 and a sub-second port 18. The first sub-port 17 is characteristic of a first polarity type and the second sub-port 18 is characteristic of a second polarity type. The input port 11 of the module 2 is located at the first side 3. The power grid is configured to be connected to the input port 11 of the first module 2 and to the input port 11 of the last module 2. The first module 2 is the module connected to a first terminal with a first polarity of the power grid and the last module 2 is the module 2 connected to a second terminal with a second polarity different from the first polarity of the power grid. In particular, the power grid is configured to be connected to the first sub-port 17 of the first module 2 and the power grid is configured to be connected to the second sub-port 18 of the last module 2. Directly neighbouring modules 2 are connected with one another by the second sub-port 18 and the first sub-port 17, respectively, for achieving the serial connection of the modules 2.

The solid-state transformer 1 is configured to be connected to energy dispensers at the second side 4.

Each module 2 has at least one, according to Figure 1 in particular two, output ports 12, each comprising a first sub-port 17 and a sub-second port 18. The output ports 12 of the module 2 are located at the second side 4. Each output port 12 is configured to be connected to one of the energy dispensers.

In particular, the first side 3 is configured to process electric energy of a medium voltage range, and the second side 4 is configured to process electric energy of a low voltage range.

At least one module 2 according to the exemplary embodiment of Figure 2 of the solid-state transformer 1 according to Figure 1 comprises three first converters 5 at the first side 3 and three second converters 6 at the second side 4. The first converters 5 and the second converters 6 are flux-linked to one another by a transformer 7. Exemplarily, the first module 2 of Figure 1 is shown in Figure 2.

The transformer 7 comprises first windings 9, second windings 10 and a single magnetic core 8. The first windings 9 are each magnetically coupled to the single magnetic core 8 and the second windings 10 are each magnetically coupled to the single magnetic core 8.

The first converters 5 are connected in series at the first side 3. Each first converter 5 has an input port 11, comprising a first sub-port 17 and a sub-second port 18. The input port 11 of the module 2 is connected to the input port 11 of the first first converter 5 and to the input port 11 of the last first converter 5. The first first converter 5 is the first converter 5 connected to the first sub-port 17 of the module 2 and the last first converter 5 is the first converter 5 connected to the second sub-port 18 of the module 2. In particular, the input port 11, particularly the first sub-port 17, of the module 2 is connected to the first sub-port 17 of the first first converter 5, and the input port 11, particularly the second sub-port 18, of the module 2 is connected to the second sub-port 18 of the last first converter 5. Directly neighbouring first converters 5 are connected with one another by the second sub-port 18 and the first sub-port 17, respectively, for achieving the serial connection of the first converters 5.

Each first converter 5 has an output port 12, comprising a first sub-port 17 and a sub-second port 18. Each output port 12 is connected to one of the first windings 9, respectively.

Each of the first converters 5 comprises a first AC/DC converter 13 and a first DC/AC converter 14. An AC side of the first AC/DC converter 13 comprises the input port 11 of the first converter 5, and a DC side of the first AC/DC converter 13 is connected to a DC side of the first DC/AC converter 14. A capacitance is arranged between the corresponding DC sides. An AC side of the first DC/AC converter 14 comprises the output port 12 of the first converter 5, which is connected to one of the first windings 9.

In particular, the first converter 5 is an AC/DC/DC/AC converter comprising the first AC/DC converter 13 and the first DC/AC converter 14.

Each second converter 6 has an input port 11, comprising a first sub-port 17 and a sub-second port 18, wherein each input port 11 is connected to the respective second winding 10. Each second converter 6 has an output port 12, comprising a first sub-port 17 and a sub-second port 18, wherein each output port 12 is configured to be connected to one of the energy dispensers.

Each of the second converters 6 comprises a second AC/DC converter 15. An AC side of the second AC/DC converter 15 comprises the input port 11, and a DC side of the second AC/DC converter 15 comprises the output port 12 of the second converter 6.

Exemplarily, second converters 6, particularly the output ports 12 thereof, of the same and/or different modules 2 can be connected to one another.

Advantageously, to provide sufficient flexibility in power adaption of the individual output ports 12, not too many second AC/DC converters 15 per module 2 must be flux-linked. This is because in high-power charging, typically several second AC/DC converters 15 are connected to an energy dispenser, which is particularly connected to an electric vehicle. By connecting an appropriate number of the second converters 6, the need to operate in deep part-load is avoided. A redistribution of electric energy via the flux link connection is then only needed for fine tuning.

Furthermore, advantageously output ports 12 of the second converters 6 of different modules 2 can be connected to a specific energy dispenser. This provides, particularly mathematically, a best flexibility when changing the redistribution of energy within the individual modules 2.

The exemplary embodiments, in particular features of the exemplary embodiments, of the Figures can be combined with one another.

### Reference Signs

- 1: solid-state transformer
- 2: module
- 3: first side
- 4: second side
- 5: first converter
- 6: second converter
- 7: transformer
- 8: core
- 9: first winding
- 10: second winding
- 11: input port
- 12: output port
- 13: first AC/DC converter
- 14: first DC/AC converter
- 15: second AC/DC converter
- 16: second DC/AC converter
- 17: first sub-port
- 18: second sub-port

## Claims

1. Solid-state transformer (1), comprising
- at least two modules (2) having a first side (3) and a second side (4), wherein each module (2) comprises
- at least one first converter (5) at the first side (3) and at least two second converters (6) at the second side (4), wherein
- the at least one first converter (5) is flux-linked to the at least two second converters (6) by a transformer (6), and wherein
- the at least two modules (2) are connected in series at the first side (3),
- the at least one first converter (5) is connected to a first winding (9) of the transformer (7), and
- each of the at least two second converters (6) is connected to a respective second winding (10) of the transformer (7).

2. Solid-state transformer (1) according to claim 1, wherein
- the at least one first converter (5) comprises a first direct current/alternating current, DC/AC, converter (14), and
- each of the at least two second converters (6) comprises a second AC/DC converter (15).

3. Solid-state transformer (1) according to claim 2, wherein
- the at least one first converter (5) comprises a first AC/DC converter (13) and the first DC/AC converter (14), and
- the first DC/AC converter (14) is connected to the transformer (7).

4. Solid-state transformer (1) according to claim 2 or 3, wherein
- each of the at least two second converters (6) comprises the second AC/DC converter (15) and a second DC/AC converter (16), and
- the second AC/DC converter (15) is connected to the transformer (6).

5. Solid-state transformer (1) according to one of claims 1 to 4, wherein
- the transformer (7) is a medium frequency transformer.

6. Solid-state transformer (1) according to one of claims 1 to 5, wherein
- each module (2) comprises at least two first converters (5) at the first side (3),
- the at least two first converters (5) of a respective module (2) are connected in series at the first side (3), and
- all the first converters (5) of a respective module (2) are flux-linked to the at least two second converters (6).

7. Solid-state transformer (1) according to one of claims 1 to 6, wherein
- at least two second converters (6) of different modules (2) are connected at the second side (4) in series or in parallel, and/or
- at least two second converters (6) of the same module (2) are connected at the second side (4) in series or in parallel, and/or
- at least some of the second converters (6) of the same module (2) are not connected to one another at the second side (4).

8. Solid-state transformer (1) according to one of claims 1 to 7, wherein
- a matrix switch is connected to the second converters (6) at the second side (4), and/or
- the solid-state transformer (1) is a bidirectional solid-state transformer.

9. Solid-state transformer (1) according to one of claims 1 to 8, wherein
- elements of the modules (2) at the first side (3) are configured to process electric energy of a medium voltage range, and
- elements of the modules (2) at the second side (4) are configured to process electric energy of a low voltage range.

10. Solid-state transformer (1) according to one of claims 1 to 9, wherein
- the modules (2) at the first side (3) are configured to be connectable to a power grid.

11. Solid-state transformer (1) according to one of claims 1 to 10, wherein
- the modules (2) at the second side (4) are configured to be connectable to at least one energy dispenser.

12. Solid-state transformer (1) according to claim 11, wherein
- the modules (2) at the second side (4) are configured to be further connectable to at least one energy storage and/or at least one energy generator.

13. System, comprising
- the solid-state transformer (1) according to one of claims 1 to 12, wherein
- the solid-state transformer (1) is connected to a power grid at the first side (3), and
- the solid-state transformer (1) is connected to at least one energy dispenser at the second side (4).

14. System according to claim 13, wherein
- the power grid comprises three phases,
- the system comprises three solid-state transformers (1) according to one of claims 1 to 12, and
- each of the three solid state transformers (1) is connected between one of the three phases and a reference potential, or
- each of the three solid state transformers (1) is connected between two of the three phases.
